# EUROPEAN PATENT APPLICATION

(11) **EP 1 113 547 A1**
(43) Date of publication of application: **04.07.2001**
(21) Application number: 99204600.3
(22) Date of filing: 30.12.1999
(51) Int. Cl.: H02B 5/00, H01F 27/06, H01H 9/00

(54) **Electric substation**

(71) Applicant: ABB T&D Technologies Ltd., 8059 Zürich (CH)
(72) Inventor: Piazza, Constante, 26900 Lodi (IT); Sciacca, Aldo, 20097 San Donato Milanese (Milano) (IT); Volponi, Silvia, 20033 Desio (Milano) (IT)
(74) Representative: Giavarini, Francesco

(57) **Abstract**

An electric transmission and/or distribution substation connected to a multi-phase power line, comprising:
- a transformer having a tank which contains a magnetic core, electric windings and a first dielectric fluid;
- a switchgear device comprising at least one casing which contains an interruption unit having a first fixed contact and a first moving contact which can couple/uncouple to each other and are electrically connected to the transformer and to the power line and a second dielectric fluid, the casing being directly connected to and mechanically supported by the tank; and first actuation means which are operatively connected to the first moving contact.

## Description

The present invention relates to an electric transmission and/or distribution substation.

In particular, the substation according to the invention, thanks to the structure of some of its components, allows to reduce the land occupation and the visual impact with respect to conventional substations, with a solution which is unique in its simplicity and effectiveness both from the point of view of production costs and of practical applications.

It is known that conventional substations use one or more power and/or distribution transformers, which are electrically connected, on one side, to the phases of a high-voltage power line, and on the other side, to a plurality of medium- and low voltage equipment.

In particular, each transformer comprises a tank which contains a magnetic core, electric windings, and an insulating fluid; further, each transformer is equipped with a plurality of bushings which allow electrical connections with the phase conductors and with the medium-and low voltage equipment.

An on-load tap changer, which comprises a selector and a diverter switch, is operatively connected to the transformer; the on-load tap changer, which can be positioned inside or outside the tank, is suitable to vary the transformation ratio of the transformer so that the voltage supplied to the medium-and low voltage equipment can be appropriately regulated.

The electrical connection between transformers and phase conductors is realized by the interposition of a plurality of switchgear elements, such as circuit breakers and disconnectors, which allow the realization of different electrical schemes according to the applications, and ensure the correct functioning of the substation.

At the present state of the art, the connections between transformers and switchgear elements are realized according to two main configurations, which have some drawbacks and disadvantages.

In particular, according to a first solution, the switchgear elements are disposed on the substation yard and are connected to the bushings of the transformer by means of conductor systems, such as busbars. In this case, the presence of conductors, which are positioned in air, causes a significant increase of the overall dimension of the substation, thus negatively increasing the land occupation and the visual impact; furthermore, the presence of busbars in air makes it necessary the use of busbars protections, for example against lightnings, and frequent maintenance interventions.

In a second solution, known in the art as "GIS" ("Gas Insulated Substation"), the switchgear elements are positioned inside a metal-clad casing which is filled with a pressurized dielectric gas, generally sulfur exafluoride (SF₆); further, also the conductors which connect the switchgear elements and the bushings of the transformer are housed, at least partially, in gas insulated ducts.

Although this solution is constructively compact and functionally effective, it needs a significant amount of SF₆, in order to provide the required insulation; this kind of gases, besides requiring a particular structure, which is extremely expensive and therefore effects the costs of the substation, have a negative environmental impact. As a matter of fact, it is necessary to adopt particular safety systems in order to avoid and/or indicate any losses and leaks of the gas; in this cases, losses and consequent leaks of the gas might in fact cause malfunctions of the substation and environmental contamination problems; moreover, frequent maintenance interventions are also required.

This obviously has a negative impact on the constructive complexity of the substation and on its overall reliability; furthermore, with this solution the substation has a structure which is not easily transportable and requires significant installation time, which can not be prefabricated and, once installed, can not be relocated.

The aim of the present invention is to realize an electric transmission and/or distribution substation which allows to reduce its overall dimension, when compared to conventional substations, thus allowing to reduce the land occupation and the visual impact.

Within the scope of this aim, an object of the present invention is to realize an electric transmission and/or distribution substation whose structure, at least partially, can be easily transported on the installation site, and, once installed, can be easily relocated.

A further object of the present invention is to realize an electric transmission and/or distribution substation which allows to reduce the installation time.

A further object of the present invention is to realize an electric transmission and/or distribution substation which allows to reduce maintenance interventions and use of protection systems.

A further object of the present invention is to realize an electric transmission and/or distribution substation which is highly reliable, relatively easy to manufacture and at low costs.

This aim, these objects and others which will become apparent hereinafter are achieved by an electric transmission and/or distribution substation connected to a multi-phase power line,
characterized in that it comprises:
- a transformer having a tank which contains a magnetic core, electric windings and a first dielectric fluid;
- a switchgear device comprising at least one casing which contains an interruption unit having a first fixed contact and a first moving contact which can couple/uncouple to each other and are electrically connected to the transformer and to the power line and a second dielectric fluid, said casing being directly connected to and mechanically supported by said tank; and
- first actuation means which are operatively connected to said first moving contact.

In this way, the overall dimension of the substation according to the invention are considerably reduced, with respect to the present state of the art; accordingly, the visual impact and the land occupation are decreased. Moreover, the module transformer- switchgear device forms a unique component which can be easily prefabricated, transported, and, if necessary, relocated from one installation site to another.

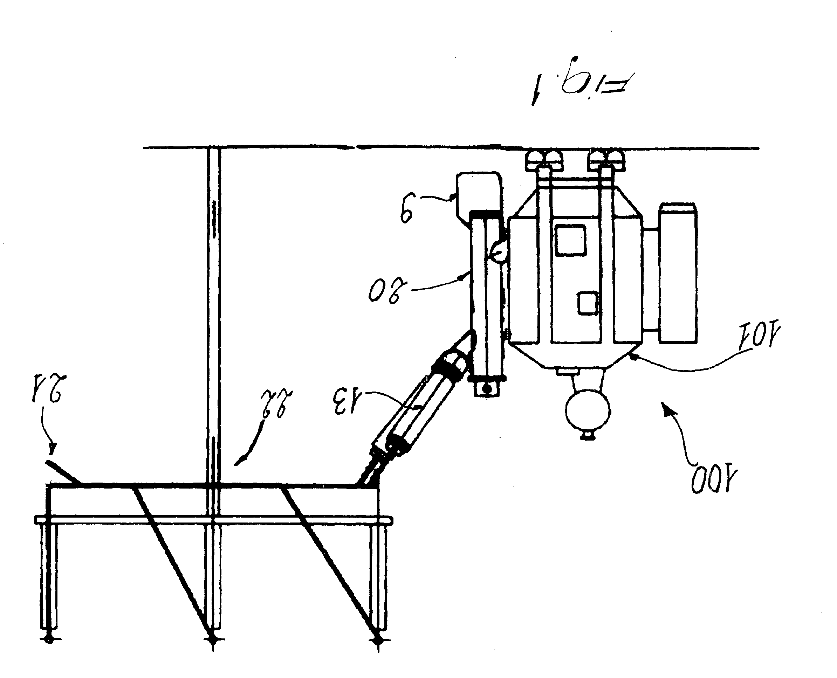

Further characteristics and advantages of the invention will become apparent from the description of preferred embodiments of the electric substation according to the invention, illustrated only by way of non-limitative example in the accompanying drawings, wherein:
Figure 1 is a schematic view partially illustrating the electric transmission and/or distribution substation, according to the invention;
Figure 2 is a schematic view illustrating a first embodiment of a switchgear device used in the electric substation according to the invention;
Figure 3 is a schematic view illustrating a second embodiment of a switchgear device used in the electric substation according to the invention;
With reference to figure 1, the electric substation according to the invention comprises a power and/or distribution transformer, designated by the reference numeral 100. The transformer 100 has a tank 101 which contains a first dielectric fluid, a magnetic core and electric windings, which are not shown in the figures; said first dielectric fluid, which has mainly an insulating function, can comprise for example a mineral oil, or a fluorinated fluid, such as sulfur hexafluoride.

An on-load tap changer, also not shown in the figures, is operatively connected to the transformer in order to vary the transformation ratio, so that the voltage supplied by the transformer can be adjusted according to the requirements of the service; according to the applications and/or specific needs, the on-load tap changer can be positioned inside or outside the tank 101.

The functioning of the transformer 100 and of the on-load tap changer, as well as their connections, are well known in the art and therefore they will not be further described.

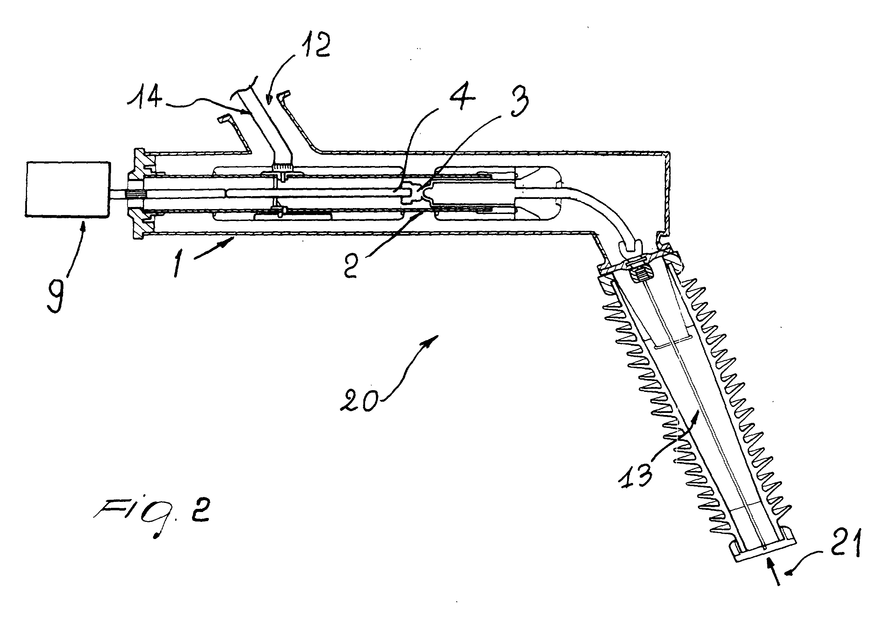

The electric substation further comprises a switchgear device, designated by the reference numeral 20 in figures 1 and 2, having at least one casing 1 which contains an interruption unit 2, of the high-voltage type. In particular, as shown in figure 2, the interruption unit 2 has a fixed contact 3 and a moving contact 4 which can couple/uncouple to each other and are electrically connected to the transformer 100 and to a multi-phase power line, schematically indicated in figure 1 by the reference numeral 21, through an electric terminal 13. For the sake of simplicity, in the following description particular reference will be made to a single phase of the power line 21; further, the connection between the switchgear device 20 and the line 21 can be realized by means of a portal 22, as shown in figure 1, or alternatively, by using other configurations.

A second dielectric fluid is provided inside the casing 1; this second dielectric fluid, which can comprise for example sulfur exafluoride, has mainly an insulating function.

Further, the switchgear device 20 comprises first actuation means 9 which are operatively connected to the moving contact 4, in order to provide coupling/uncoupling of the contacts 3 and 4.

Advantageously, in the electric substation according to the invention, the casing 1 is directly connected to and mechanically supported by the tank 101; in this way, the overall dimension of the transformer bay in particular, and of the substation in general, are drastically reduced, with a very simple and effective solution. In fact, the bushings of the transformer 100, along the power line side, and the busbars which connect electrically the transformer itself and the interruption elements, are completely eliminated, thus reducing the number of components in air, the maintenance interventions required, and consequently increasing the overall reliability of the substation.

In particular the mechanical connection between the transformer 100 and the casing 1 is realized, in a very simple and effective way, by means of a flange system; said flange system is positioned in correspondence of the edges of a first hole 12 and of a second hole, not shown in the figures, which are provided in the casing 1 and the tank 101, respectively. A conductor 14, which passes through the first hole 12 and the second hole, allows the electrical connection between the transformer 100 and the interruption unit 2. Advantageously, the conductor 14 is surrounded and supported by an insulating spacer, not shown in the figures, which is suitably shaped in order to segregate the first dielectric fluid from the second dielectric fluid; alternatively, the spacer can be substituted by a bushing insulator connected to the conductor 14.

With this solution it is possible to avoid the use of additional interconnecting components, such as gas insulated ducts; further, the transformer 100 and the switchgear device 20 form a module which can be easily transported and relocated.

Furthermore, with reference to a top view, the tank 101 has a substantially rectangular shape and the casing 1 can be positioned, in a substantially vertical position, along one of the long sides of said rectangular section, according to a solution which is particularly advantageous from the point of view of the electrical connections between the transformer and the interruption unit. Alternatively, the casing 1 can be placed along one of the short sides of said rectangular section, with a solution which is advantageous from the point of view of the cooling system of the transformer.

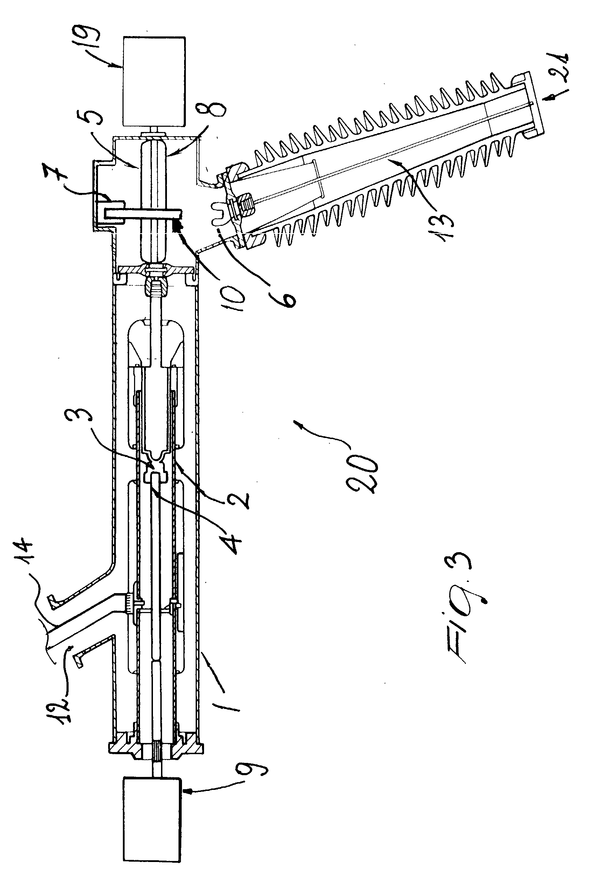

According to a second embodiment shown in figure 3, the switchgear device 20 comprises at least one disconnection unit 5 positioned inside the casing 1 and electrically interposed between the interruption unit 2 and the corresponding phase of the power line; in particular, the disconnection unit 5 comprises a first fixed contact 6, which is connected to the electric terminal 13, a second fixed contact 7 at ground potential, and a moving contact 10 which is electrically connected to the interruption unit 2 and is fixed to a shaft 8. In turn, the terminal 13 is connected electrically to the corresponding phase of the line 21.

Clearly, the number and positioning of the contacts of the disconnection unit 5 can be appropriately changed according to the applications and/or specific needs.

Second actuation means, schematically represented by a unit 19, move the shaft 8 thus determining the rotation of the contact 10 and its coupling with the contact 6 or 7.

Preferably, the first actuation means 9 and/or the second actuation means 19 comprise a motor with position control; in particular, the use of a servomotor entails considerable advantages in terms of precision and speed of execution of the operations.

As an alternative, it is possible to use mechanical, or electromechanical, or pneumatic, or hydraulic actuation means.

Another significative advantage of the electric substation according to the invention, resides in the fact that, thanks to the structure of the module transformer 100-switchgear device 20 and considering the various phases of the power line, it allows the realization of many different configurations, thus satisfying various application needs without significantly effecting the costs or increasing the structural complexity of the substation.

In particular, the switchgear device 20 can comprise a unique casing 1 which contains, for each phase of the power line, an interruption unit 2 connected to the transformer 100 and to the corresponding phase, and a dielectric fluid, as previously described; further, a disconnection unit 5 can be also positioned inside the casing 1 and electrically interposed between the corresponding interruption unit 2 and the corresponding phase of the power line.

Alternatively, for each phase of the power line, a casing 1 can be used; in this case, all casings 1 can be connected to the tank 101, as previously described, each casing 1 containing only an interruption unit 2 and a dielectric fluid, or also a disconnection unit 5.

According to these configurations, the first actuation means 9 can comprise a single motor with position control, for example a servomotor, operatively connected to the moving contact 4 of each interruption unit 2, according to a solution which is cheap and effective at the same time. Alternatively, the first actuation means 9 can comprise, for each phase, a motor with position control, for example a servomotor, operatively connected to the moving contact 4 of the corresponding interruption unit 2.

In an equivalent manner, also the second actuation means 19 can comprise a unique motor with position control, operatively connected to the moving contact 10 of each disconnection unit 5, or, for each phase, a motor with position control, operatively connected to the moving contact 10 of the corresponding disconnection unit 5.

In practice it has been found that the electric substation according to the invention allows to achieve the intended aim and objects, since it has a structure which allows to reduce the land occupation and the visual impact, that can be prefabricated, easily transported and even relocated.

The electric substation thus conceived is susceptible of numerous modifications and variations, all of which are within the scope of the inventive concept; for example, other components, such as measuring transformers and/or various kind of protections, can be positioned inside the casing 1. All the details may also be replaced with other technically equivalent elements.

In practice, the materials employed, so long as they are compatible with the specific use, as well as the dimensions, may be any according to the requirements and to the state of the art.

## Claims

1. An electric transmission and/or distribution substation connected to a multi-phase power line, characterized in that it comprises:
- a transformer having a tank which contains a magnetic core, electric windings and a first dielectric fluid;
- a switchgear device comprising at least one casing which contains an interruption unit having a first fixed contact and a first moving contact which can couple/uncouple to each other and are electrically connected to the transformer and to the power line and a second dielectric fluid, said casing being directly connected to and mechanically supported by said tank; and
- first actuation means which are operatively connected to the first moving contact.

2. An electrical substation according to claim 1 characterized in that it comprises at least one disconnection unit positioned inside said casing and interposed between the interruption unit and the power line, said disconnection unit having at least a second fixed contact and a second moving contact which can couple/uncouple to each other, and second actuation means which are operatively connected to said second moving contact.

3. An electrical substation according to one or more of the preceding claims characterized in that it comprises a conductor for electrically connecting the transformer and the interruption unit, said conductor passing through a first hole and a second hole provided in the casing and the tank, respectively, and being supported by an insulating spacer which is suitable to segregate said first dielectric fluid from said second dielectric fluid.

4. An electrical substation according to one or more of the claims 1 to 3 characterized in that it comprises a conductor for electrically connecting the transformer and the interruption unit, said conductor passing through a first hole and a second hole provided in the casing and the tank, respectively, and being surrounded by a bushing insulator which is suitable to segregate said first dielectric fluid from said second dielectric fluid.

5. An electric substation according to one or more of the preceding claims characterized in that said first actuation means comprise a motor with position control.

6. An electric substation according to one or more of the preceding claims characterized in that said second actuation means comprise a motor with position control.

7. An electric substation according to claim 5 or 6 characterized in that said motor with position control is a rotary servomotor.

8. An electric substation according to one or more of the preceding claims characterized in that said tank has, with reference to a top view, a substantially rectangular section, the casing being positioned along one of the long sides of said rectangular section.

9. An electric substation according to one or more of the preceding claims characterized in that said tank has, with reference to a top view, a substantially rectangular section, the casing being positioned along one of the short sides of said rectangular section.

10. An electric substation according to one or more of the preceding claims characterized in that said casing contains, for each phase of the power line, an interruption unit having a first fixed contact and a first moving contact which can couple/uncouple to each other and are electrically connected to the transformer, the first actuation means being operatively connected to the first moving contact.

11. An electric substation according to claim 10 characterized in that it comprises, for each phase of the power line, a disconnection unit positioned inside said casing and interposed between a corresponding interruption unit and the corresponding phase of the power line, said disconnection unit having at least a second fixed contact and a second moving contact which can couple/uncouple to each other, said second actuation means being operatively connected to the second moving contact.

12. An electric substation according to one or more of the preceding claims characterized in that it comprises, for each phase of the power line, a casing which is connected to and mechanically supported by said tank and contains:
- an interruption unit having a first fixed contact and a first moving contact which can couple/uncouple to each other and are electrically connected to the transformer and a second dielectric fluid; and
- a disconnection unit interposed between the corresponding interruption unit and the corresponding phase of the power line, said disconnection unit having at least a second fixed contact and a second moving contact which can couple/uncouple to each other; said first actuation means and said second actuation means being operatively connected to the moving contact of the interruption unit and of the disconnection unit, respectively.

13. An electric substation according to one or more of the claims 10 to 12 characterized in that said first actuation means comprise, for each phase, a motor with position control.

14. An electric substation according to one or more of the claims 10 to 12 characterized in that said first actuation means comprise a single motor with position control, operatively connected to the first moving contact of each interruption unit.

15. An electric substation according to claims 11 and 12 characterized in that said second actuation means comprise, for each phase, a motor with position control.

16. An electric substation according to claims 11 and 12 characterized in that said second actuation means comprise a single motor with position control operatively connected to the moving contact of each disconnection unit.
